# EUROPEAN PATENT SPECIFICATION

(11) **EP 4 112 884 B1**
(45) Date of publication and mention of the grant of the patent: **03.09.2025**
(21) Application number: 21183176.3
(22) Date of filing: 01.07.2021
(51) Int. Cl.: F01D 5/22, F01D 5/26

(54) **BLADE FOR A TURBOMACHINE, BLADE ASSEMBLY, AND TURBINE**
SCHAUFEL FÜR EINE TURBOMASCHINE, SCHAUFELANORDNUNG UND TURBINE
AUBE POUR TURBOMACHINE, ENSEMBLE AUBES ET TURBINE

(43) Date of publication of application: 04.01.2023
(73) Proprietor: Doosan Enerbility Co., Ltd., Seongsan-gu Changwon-si, Gyeongsangnam-do 51711 (KR)
(72) Inventor: TSYPKAYKIN, Igor, 5400 Baden (CH); MARTIN, Stefan Emanuel, 5400 Baden (CH); BEAUMONT, Wade, 5400 Baden (CH); KRUECKELS, Joerg, 5400 Baden (CH); HOFFMANN, Willy H., 5400 Baden (CH)
(74) Representative: BCKIP Part mbB

(56) References cited:
- EP-A1- 2 738 351
- JP-A- H07 233 703
- US-A1- 2011 142 654
- US-A1- 2011 194 939
- US-A1- 2012 224 974
- US-A1- 2014 119 923

## Description

### TECHNICAL FIELD

The present invention relates to a blade for a turbo machine such as a gas turbine or a steam turbine, a blade assembly, and a turbine.

### BACKGROUND

In a turbo machine such as a steam or a gas turbine, typically, a plurality of blades is coupled to a rotor disk. The blades are exposed to and cooperate with a working fluid such as air or steam. The working fluid flows between the blades and either applies work to the blades in a turbine part of the turbo machine or receives work from the blades in a compressor part of the turbo machine. Therefore, the blades have to withstand high mechanical loads.

In order to limit vibrational stresses, the blades, typically, are provided with snubber structures. Such snubber structures usually include snubber elements protruding from a suction side and from a pressure side of each blade at identical radial positions. Thereby, when the blades are rotated with the disk, adjacent ends of the snubber elements come into contact and form a cooperative structure between the blades that is configured to reduce vibrational stresses.

US 8 540 488 B2 discloses a rotor for a turbo machine comprising a plurality of blades and a damping structure extending between adjacent blades. The damping structure includes a snubber element protruding from a suction side of a first blade towards a second blade, wherein an end of the snubber element is position adjacent to a cooperative surface provided on a small protrusion on a pressure side of the second blade.

US 8 523 525 B2 discloses a turbine blade comprising a snubber assembly that includes first and second snubber elements protruding from opposite suction and pressure side surfaces of the blade, wherein each snubber element abuts a filet which is integrally formed with the respective suction and pressure side surface.

JP H07 233703 A discloses a balde for a gas turbine comprising an airfoil on which tip a shroud is formed by elements that protrude from opposite surfaces of the airfoil in a circumferential direction. A filet is provided between the surfaces of the airfoil and a lower side of the protruding elements of the shroud. Those filets define a first radius on both opposite surfaces of the airfoil. On an upper side of the protruding elements, filets are formed with a second radius being greater than the first radius on the lower side.

US 2014/0119923 A1 discloses a blade for a turbine having an airfoil portion with a convex surface and an opposite concave surface, wherein part span shrouds extend from the convex and concave surfaces. The part span shrouds are connected to the airfoil portion by filets. Variants of part span shrouds having a hollow portion are disclosed that may include a smaller filet than a solid shroud, because the solid part span shroud weighs more and requires more support.

Although snubber structures help to reduce vibrational stress in the blades, they may generate aerodynamic losses since they protrude from the aerodynamic surfaces of the blade that define the pressure side and the suction side.

### SUMMARY OF THE INVENTION

One of the ideas of the present invention is to provide improved solutions for snubber structures of a blade for a turbo machine, in particular, to provide snubber structures which cause less aerodynamic losses.

The present invention provides a blade for a turbo machine in accordance with claim 1, a blade assembly in accordance with claim 8, and a turbine in accordance with claim 9.

According to a first aspect of the invention, a blade for turbo machine, in particular for a turbine, includes an airfoil body extending in a radial direction and comprising a suction side surface and a pressure side surface opposite to the suction side surface with regard to a circumferential direction that extends transverse to the radial direction, and a snubber structure. The snubber structure includes a first snubber element protruding, along the circumferential direction, from the suction side surface of the airfoil body, and a second snubber element protruding, along the circumferential direction, from the pressure side surface of the airfoil body. An upper first transition portion forms a concave curved connection between the suction side surface and an upper surface of the first snubber element, the upper surfacea of the first snubber element, with regard to the radial direction facing towards a tip end of the airfoil body. A lower first transition portion forms a concave curved connection between the suction side surface and a lower surface of the first snubber element, the lower surface of the first snubber element, with regard to the radial direction facing towards a root end of the airfoil body. Each first transition portion defines a first radius wherein the first snubber element is connected to the suction side surface of the airfoil body by a concave curved first transition portion having a first radius. An upper second transition portion forms a concave curved connection between the pressure side surface and an upper surface of the second snubber element, the upper surface of the second snubber element, with regard to the radial direction facing towards the tip end of the airfoil body. A lower second transition portion forms a concave curved connection between the pressure side surface and a lower surface of the second snubber element, the lower surface of the second snubber element, with regard to the radial direction facing towards the root end of the airfoil body. Each second transition portion defines a second radius, wherein the first radius is smaller than the second radius. The first and the second snubber elements may be arranged at identical or substantially identical positions with regard to the radial direction.

According to a second aspect of the invention, a blade assembly for a turbo machine includes a plurality of blades according to the first aspect of the invention, and a rotor disk to which said plurality of the turbine blades is coupled, wherein the first snubber element of each blade includes a first contact surface facing away from the suction side surface, wherein the second snubber element of each blade includes a second contact surface that faces away from the pressure side surface, and wherein each first contact surface faces one second contact surface. Thus, the contact surfaces of first and second snubber elements of blades that are adjacent to each other in the circumferential direction face each other. When the rotor disk is stationary, i.e. not rotated, a gap or clearance may be present between the first and second contact surfaces. When the rotor disk is rotated, the first and second contact surfaces may come into contact with each other.

According to a third aspect of the invention, a turbine, e.g. a steam or gas turbine, is provided that comprises the turbine blade assembly according to the second aspect of the invention.

Generally, the pressure side surface and the suction side surface define a cross-section of the airfoil body and define an aerodynamic profile configured to generate a lift force directed from the pressure side surface towards the suction side surface, when a fluid flows along the pressure and the suction side surfaces from a front end or leading edge towards a rear end or trailing edge of the airfoil body. Generally, the airfoil body extends in a radial direction as a longitudinal body and further extends in an axial direction, which is transverse to the radial direction, between said front end and said rear end.

The snubber elements, generally, may be realized as fins protruding from the respective suction and pressure side surfaces along a circumferential direction which is transverse to the radial and the axial direction. Further, the snubber elements may have a certain expanse or width along the axial direction, wherein the width along the axial direction is smaller than a width of the airfoil body between the front and the aft end. The snubber elements extend along the circumferential direction and, thus, extend substantially perpendicular to the radial direction. To avoid a sharp edge or corner between the pressure and suction side surface and the respective snubber element, a smooth, concave curved transition portion or surface is provided that connects the respective pressure or suction side surface and the respective snubber element and that defines a predefined radius.

One of the ideas on which the present invention is based is that the snubber elements on the suction side surface and the pressure side surface of the airfoil body of the blade are realized with different dimensions. In particular, a transition from the suction side surface to the first snubber element is realized with a smaller radius or with a sharper edge than a transition from the pressure side surface to the second snubber.

One of the advantages of the invention is that aerodynamic losses are reduced, because the first radius of the first transition portion or surface that connects the suction side surface and the first snubber element is smaller than the second radius of the second transition portion or surface that connects the pressure side surface and second the snubber element. When a plurality of blades is arranged adjacent along the circumferential direction, first and second snubber elements of adjacent blades are arranged adjacent to each other. Due to the decreased radius of the first transition portion, a loss mechanism, according to which separated flow travels from the pressure side of one blade along the snubber elements towards the suction side of an adjacent blade and generates vortices with shear layers present at the first transition portion or region between the suction side surface and the respective first snubber element, is remarkably reduced.

Advantageous embodiments of the present disclosure are provided in dependent claims and in the following description, referring to the drawings.

According to some embodiments, the first snubber element protrudes from the suction side surface by a first length, and the second snubber element protrudes from the pressure side surface by a second length, wherein the first length is smaller than the second length. Thus, the first and the second snubber elements are asymmetric with regard to the circumferential direction. This further helps to reduce the impact of the loss mechanism described above. Further, the mechanical stress levels can be more uniformly distributed by reducing the length of the first or suction side snubber element in addition to making the first radius smaller than the second radius.

According to some embodiments, the first snubber element includes a first contact surface that faces away from the suction side surface and that extends along an axial direction, the axial direction running transverse to the radial direction and the circumferential direction, wherein the second snubber element includes a second contact surface that faces away from the pressure side surface and that extends along the axial direction, and wherein the first length and the second length are measured along a connection line that connects a center position of the first contact surface with regard to the axial direction and a center position of the second contact surface with regard to the axial direction. The center position may be at the half way of a length of the respective contact surface.

According to some embodiments, the first contact surface and the second contact surface each extend, at least partially, inclined relative to the axial direction. This positively eases assembly of the blades. For example, the contact surfaces each may have a section that extends inclined relative to the axial direction. Optionally, the contact surface additionally may have at least one portion that extends along or parallel to the axial direction.

According to some embodiments, a ratio of the first length to the second length is within a range between 0.7 and 0.9. Thus, the first snubber element provided on the suction side surface is only shorter by a relatively small amount. Thereby, a mechanical stress can be distributed between the snubber elements relatively uniform.

According to some embodiments, a ratio of the first radius to the second radius may be within a range between 0.2 and 0.8.

According to some embodiments, the snubber structure and the airfoil body are integrally formed. For example, the first and the second snubber elements and the airfoil body can be formed as one single piece in a casting process or in an additive manufacturing process, e.g. in a 3D-printing-process such as selective laser melting.

According to some embodiments, the blade assembly forms part of a turbine section of the turbine.

With respect to directions and axes, in particular with respect to directions and axes concerning the extension or expanse of physical structures, within the scope of the present disclosure, an extent of an axis, a direction, or a structure "along" another axis, direction, or structure includes in particular that said axes, directions, or structures, in particular tangents which result at a particular site of the respective structures, enclose an angle which is smaller than 45 degrees, preferably smaller than 30 degrees and in particular preferable extend parallel to each other.

With respect to directions and axes, in particular with respect to directions and axes concerning the extension or expanse of physical structures, within the scope of the present invention, an extent of an axis, a direction, or a structure "crossways", "across", "cross", or "transversal" to another axis, direction, or structure includes in particular that said axes, directions, or structures, in particular tangents which result at a particular site of the respective structures, enclose an angle which is greater or equal than 45 degrees, preferably greater or equal than 60 degrees, and in particular preferable extend perpendicular to each other.

Within the scope of this disclosure, the term "integrally formed" or "integral" with respect to one or more components may in particular be understood such that these components are realized as one single piece in the form of a unity of material or substance, in particular one of the components cannot be separated from the one or more other components without removing the unity of material.

The features described herein for one aspect of the invention are also disclosed for the other aspects of the invention and vice versa.

### BRIEF DESCRIPTION OF THE DRAWIGNS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Fig. 1: shows a schematic cross-sectional view of a gas turbine according to an embodiment of the invention.
- Fig. 2: shows a schematic partial cross-sectional view of a blade assembly according to an embodiment of the invention;
- Fig. 3: shows a top view of a blade for a turbo machine according to an embodiment of the invention;
- Fig. 4: shows the blade of Fig. 3 in a cross-sectional view along line A-A depicted in Fig. 3;
- Fig. 5: shows results of a flow simulation in a top view to a blade assembly of a comparative example;
- Fig. 6: shows results of a flow simulation in a top view to a blade assembly according to an embodiment of the invention.

In the figures like reference signs denote like elements unless stated otherwise.

### DETAILED DESCRIPTION OF THE DRAWINGS

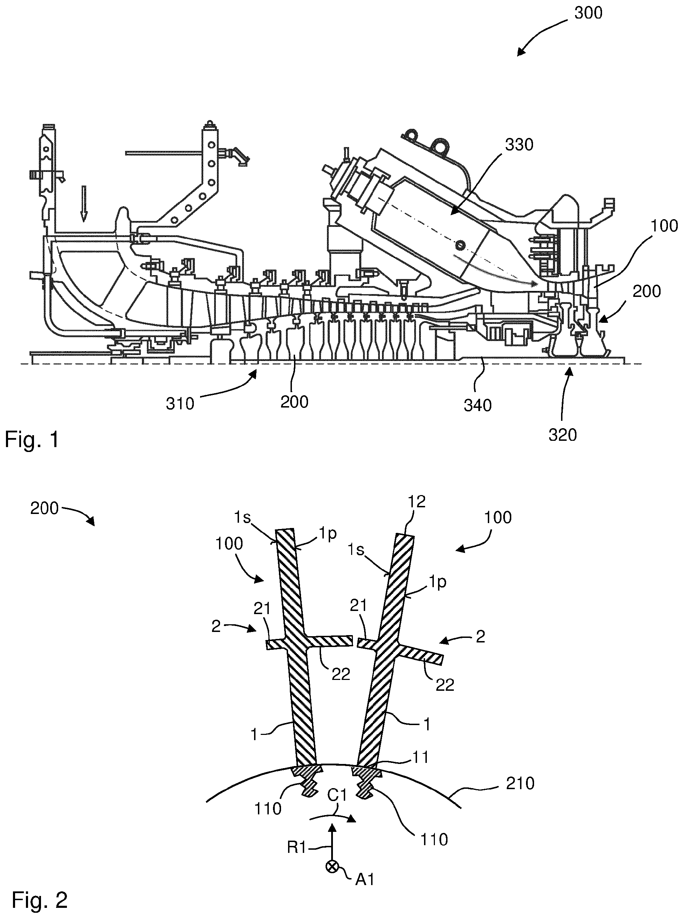

Fig. 1 schematically shows a gas turbine 300 as an example for a turbo machine. The gas turbine 300 includes a compressor section 310 configured to rotate about a rotational axis to compress a working fluid, a turbine section 320 configured to be rotated about the rotational axis by expanding the working fluid, and a combustion chamber 330 for combusting fuel with the working fluid. The turbine section 320 is kinematically coupled to the compressor section 310 in order to rotate the compressor section 310. The compressor section 310 and the turbine section 320 each include a plurality of blade assemblies 200 that may be mounted to a common central shaft 340. Each blade assembly 200 includes a plurality of blades 100 extending in a radial direction R and comprising an aerodynamic surface. The working principle of a gas turbine 300 is well known to the person skilled in the art and, therefore, a detailed description thereof will be omitted herein.

Fig. 2 exemplarily shows a blade assembly 200 for a turbo machine, e.g. for the gas turbine 300. The blade assembly 200 includes a plurality of blades 100 and a rotor disk 210 to which said plurality of the turbine blades 100 is coupled. The disk 210 functions as a carrier for the blades 210 and may be fixed to the central shaft 340 of the turbine 300. Each blade 100 may include a coupling interface 110, e.g. in the form of a firtree shaped root as exemplarily shown in Fig. 2, by which it is coupled or fixed to the disk 210. For example, the root may be inserted in a complementary shaped recess in the disk 210. As is further visible in Fig. 2, the blades 100 are arranged adjacent to each other in a circumferential direction C1. The blade assembly 200 may form part of a turbine section 320 of the turbine 300. However, the invention is not limited thereto.

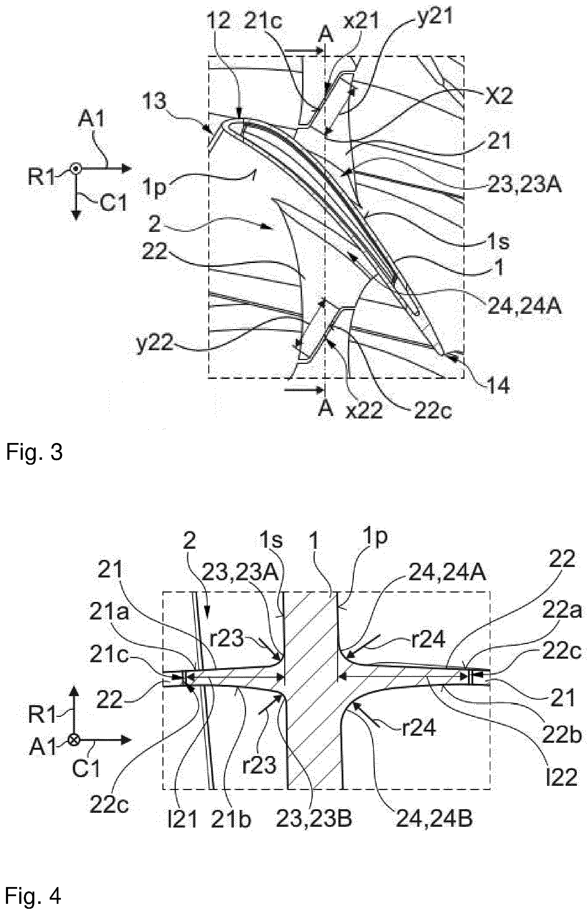

Fig. 2 shows the blades 100 in a mere schematic fashion. Fig. 3 shows a more detailed top view to a blade 100. As shown in Figs. 2 and 3, each blade 100 comprises an airfoil body 1 and a snubber structure 2. The airfoil body 1, generally, extends along a radial direction R1 between a root end 11 and a tip end 12. Further, the airfoil body 1, with regard to an axial direction A1, extends between a front or leading end 13 and an aft or trailing end 14. The axial direction A1 extends transverse to the radial direction R1. The circumferential direction C1 extends transverse to the axial direction A1 and the radial direction R1. Further, each blade 100 includes a suction side surface 1s and a pressure side surface 1p lying opposite to the suction side surface 1s. The suction side surface 1s and a pressure side surface 1p each extend between the front end 13 and the aft end 14 of the airfoil body 1 and, together, define a cross-section of the airfoil body 1.

As shown in Figs. 2 and 3, the snubber structure 2 of the blade 100 includes a first snubber element 21 and a second snubber element 22. Fig. 4 shows the blade 100 of Fig. 3 in a cross-sectional view taken along line A-A, as depicted in Fig. 4. As shown in Figs. 2 to 4, the first snubber element 21 protrudes from the suction side surface 1s of the airfoil body 1 with regard to the circumferential direction C1. As shown in Figs. 3 and 4, the first snubber element 21 may be realized in the form of a longitudinal fin. Generally, the first snubber element 21, with an inner end, is coupled to the suction side surface 1c of the airfoil body 1, and an opposite, outer end faces away from the suction side surface 1c of the airfoil body 1. At the outer end of the first snubber element 21, a first contact surface 21c may be provided which, optionally, may extend inclined relative to the axial direction A1, as exemplarily shown in Fig. 3. Generally, the first contact surface 21c faces away from the suction side surface 1s and, at least partially, extends along an axial direction A1. For example, the first contact surface 21c may include a middle portion that extends inclined relative to the axial direction A1 of a predefined length y21, wherein the middle portion is provided to contact a middle portion of a second contact surface 22c of a second snubber element 22 of an adjacent blade 100. Further, the contact surface may include, at opposite ends of the middle portion, end portions that extend along or substantially parallel to the axial direction, as exemplarily shown in Fig. 3.

As further shown in Figs. 3 and 4, the first snubber element 21, in the region of the inner end, is connected to the suction side surface 1s of the airfoil body 1 by a first transition portion 23. As shown in Fig. 4, the first transition portion 23 defines a concave curved surface. The transition portion 23 forms a continuous connection between the suction side surface 1s and a surface of the first snubber element 21. In particular, there is an upper first transition portion 23A forming a concave curved connection between the suction side surface 1s and an upper surface 21a of the first snubber element 21, wherein the upper surface 21a of the first snubber element 21, with regard to the radial direction R1 faces towards the tip end 12 of the airfoil body 1. Further, there is provided a lower first transition portion 23B forming a concave curved connection between the suction side surface 1s and a lower surface 21b of the first snubber element 21, wherein the lower surface 21b of the first snubber element 21, with regard to the radial direction R1 faces towards the root end 11 of the airfoil body 1. Each first transition portion 23A, 23B or, generally, the first transition portion 23 have or define a first radius r23. The first radius r23 of the upper and the lower first transition portions 23A, 23B are the same.

The first snubber element 21 and the airfoil body 1, preferably, are integrally formed as one single piece.

As further shown in Figs. 2 to 4, the second snubber element 22 protrudes from the pressure side surface 1p of the airfoil body 1 with regard to the circumferential direction C1. As shown in Figs. 3 and 4, the second snubber element 22 may be realized in the form of a longitudinal fin. Generally, the second snubber element 22, with an inner end, is coupled to the pressure side surface 1p of the airfoil body 1, and an opposite, outer end faces away from the pressure side surface 1p of the airfoil body 1. At the outer end of the second snubber element 22, a second contact surface 22c may be provided which, optionally, may extend inclined relative to the axial direction A1, as exemplarily shown in Fig. 3. Generally, the second contact surface 22c faces away from the pressure side surface 1p and, at least partially, extends along the axial direction A1. For example, the second contact surface 22c may include a middle portion of a predefined length y22 that extends inclined relative to the axial direction A1, wherein the middle portion is provided to contact the middle portion of the first contact surface 21c a first snubber element 21 of an adjacent blade 100. Further, the second contact surface 22c may include, at opposite ends of the middle portion, end portions that extend along or substantially parallel to the axial direction, as exemplarily shown in Fig. 3. As schematically shown in Figs. 2 to 4, the contact surfaces 21c, 22c of first and second snubber elements 21, 22 of blades 100, that are arranged adjacent in the circumferential direction C1, face towards each other. In a state, in which the blades 100 are not rotated with the disk 210, i.e. are stationary, a small gap is formed between opposite first and second contact surfaces 21c, 22c. When the blades 100 are rotated with the disk 210, the opposite first and second contact surfaces 21c, 22c, in particular, the middle portions of the first and second contact surfaces 21c, 22c come into contact with one another.

As further shown in Figs. 3 and 4, the second snubber element 22, in the region of the inner end, is connected to the pressure side surface 1p of the airfoil body 1 by a second transition portion 24. As shown in Fig. 4, the second transition portion 24 defines a concave curved surface. The transition portion 24 forms a continuous connection between the pressure side surface 1p and a surface of the second snubber element 22. In particular, there is an upper second transition portion 24A forming a concave curved connection between the pressure side surface 1p and an upper surface 22a of the second snubber element 22, wherein the upper surface 22a of the second snubber element 22, with regard to the radial direction R1 faces towards the tip end 12 of the airfoil body 1. Further, there is provided a lower second transition portion 24B forming a concave curved connection between the pressure side surface 1p and a lower surface 22b of the second snubber element 22, wherein the lower surface 22b of the second snubber element 22, with regard to the radial direction R1 faces towards the root end 11 of the airfoil body 1. Each second transition portion 24A, 24B or, generally, the second transition portion 24 have or define a second radius r24. The second radius r24 of the upper and the lower second transition portions 24A, 24B are the same. The second snubber element 22 and the airfoil body 1, preferably, are integrally formed as one single piece.

As is schematically shown in Fig. 4, the first radius r23 of the first transition portion 23 is smaller than the second radius r24 of the second transition portion 24, or, put the other way round, the second radius r24 is greater than the first radius r23. Hence, on the suction side surface 1s, a sharper transition or connection between the suction side surface 1s and the surface of the first snubber element 21 is realized compared to the transition or connection between the pressure side surface 1p and the second snubber element 22. As visible in Fig. 4, thereby, the first snubber element 21, at its inner end or its transition portion 23, has a smaller width in the radial direction R1 than the second snubber element 22 at its inner end or its transition portion 24. For example a ratio of the first radius r23 to the second radius r24, i.e. a ration r23/r24 may lie within a range between 0.2 and 0.8.

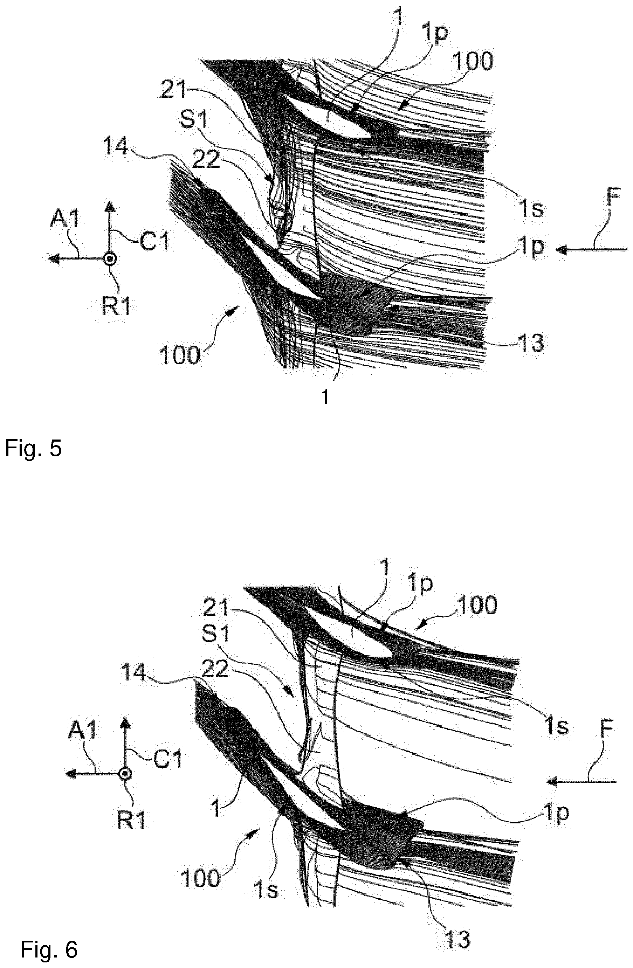

Figs. 5 and 6 each show results of a flow simulation, wherein two blades 100 arranged adjacent to each other in the circumferential direction C1 are shown in a top view, and wherein the blades 100 are subject to a fluid flow flowing in a main flow direction F. The main flow direction F is substantially parallel to the axial direction A1, so that the fluid flows along the pressure side surfaces 1p and the suction side surfaces 1s from the front end 13 to the aft end 14 of the airfoil bodies 1. The flow conditions are identical in Figs. 5 and 6.

In Fig. 5, the snubber elements 21, 22 of the blades 100 are connected to the respective airfoil body 1 by transition portions 23, 24 having the same radius r23, r24 on both, the suction side surface 1s and the pressure side surface 1p. As visible in Fig. 5, a remarkable flow S1 of separated fluid occurs along the snubber elements 21, 22 from the pressure side surface 1p of one blade 100 towards the suction side surface 1s of the adjacent blade 1p. This cross-flow S1, with shear layers resulting from the transition portion 23 on the suction side surface 1s of the adjacent blade 100, forms vortices that cause losses.

In contrast to the configuration of the blades 100 shown in Fig. 5, the blades 100 shown in Fig. 6 are realized as described by reference to Figs. 2 to 4, wherein the first snubber element 21 is connected to the suction side surface 1s of the airfoil body 1 by the concave curved first transition portion 23 having a first radius r23, and wherein the second snubber element 22 is connected to the pressure side surface 1p of the airfoil body 1 by a concave curved second transition portion 24 having a second radius r24, the first radius r23 being smaller than the second radius r24. As apparent from Fig. 6, the cross-flow along the snubber elements 21, 22 from the pressure side surface 1p of one blade 100 towards the suction side surface 1s of the adjacent blade 100 is remarkably reduced. Therefore, generation of vortices and, consequently, losses in general are reduced, too.

Fig. 2 schematically shows that the second snubber element 22 may protrude further from the pressure side surface 1p than the first snubber element 21 protrudes from the suction side surface 1s. This optional configuration is shown in more detail in Figs. 3 and 4. As shown in Fig. 4, the first snubber element 21 may protrude from the suction side surface 1s by a first length l21, and the second snubber element may protrude from the pressure side surface 1p by a second length l22, wherein the first length l21 is smaller than the second length l22. The first length l21 and the second length l22, generally, are to be understood as an expanse of the respective snubber element 21, 22 with respect to the circumferential direction C1. For example, the first length l21 and the second length l22 may be measured along a line X2 that is depicted in Fig. 3. Said line or connection line X2 connects a center position x21 of the first contact surface 21c with regard to the axial direction A1 and a center position x22 of the second contact surface 22c with regard to the axial direction A1. For example, the center position of the first contact surface 21c may be defined as the center of the middle section or the half way of the length y21 of the middle section of the first contact surface 21c. In the same way, the center position of the second contact surface 22c may be defined as the center of the middle section or the half way of the length y22 of the middle section of the second contact surface 22c, as exemplarily shown in Fig. 3. A ratio of the first length l21 to the second length l21, i.e. the ration l21/l22 may lie within a range between 0.7 and 0.9. Since the first snubber element 21, at its inner end or its transition portion 23, has a smaller width in the radial direction R1 than the second snubber element 22 at its inner end or its transition portion 24, reducing the length l21 of the first snubber element 21 advantageously reduces the stress level in the first transition portion 23.

Referring particularly to Fig. 2, it is visible that the snubber elements 21, 22 of adjacent blades extend towards each other in the circumferential direction C1, wherein each first contact surface 21c faces one second contact surface 22c. As explained above and as visible in Fig. 2, a small gap is present between the first and second contact surfaces 21c, 22c in a stationary state of the blade assembly 200. Thus, the first and second snubber elements 21, 22, and the gap between the contact surfaces 21c, 22c having a predefined width together amount to the distance between the adjacent blades 100 with regard to the circumferential direction. Thus, the amount by which the length l21 of the first snubber element 21 is reduced corresponds to the amount by which the length l22 of the second snubber element 22 is increased, compared to a symmetric configuration.

Although specific embodiments have been illustrated and described herein, it will be appreciated by those of at least ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

### List of reference signs

- 1: airfoil body
- 1p: pressure side surface
- 1s: suction side surface
- 2: snubber structure

- 11: root end
- 12: tip end
- 13: front or leading end
- 14: aft or trailing end
- 21: first snubber element
- 21a: upper surface of the first snubber element
- 21b: lower surface of the first snubber element
- 21c: first contact surface
- 22: second snubber element
- 22a: upper surface of the second snubber element
- 22b: lower surface of the second snubber element
- 22c: second contact surface
- 23: first transition portion
- 23A: upper first transition portion
- 23B: lower first transition portion
- 24: second transition portion
- 24A: upper second transition portion
- 24B: lower second transition portion

- 100: blade
- 110: coupling interface
- 200: blade assembly
- 210: rotor disk
- 300: turbine
- 310: compressor section
- 320: turbine section
- 330: combustion chamber
- 340: central shaft
- A1: axial direction
- C1: circumferential direction
- l21: first length
- l22: second length
- R1: radial direction
- r23: first radius
- r24: second radius
- S1: cross-flow
- X2: connection line
- x21: center position of the first contact surface
- x22: center position of the second contact surface
- y21: predefined length
- y22: predefined length

## Claims

1. A blade (100) for turbo machine, in particular for a turbine (300), comprising:
an airfoil body (1) extending in a radial direction (R1) and comprising a suction side surface (1s) and a pressure side surface (1p) opposite to the suction side surface (1s) with regard to a circumferential direction (C1) that extends transverse to the radial direction (R1); and
a snubber structure (2) including a first snubber element (21) protruding, along the circumferential direction (C1), from the suction side surface (1s) of the airfoil body (1), and a second snubber element (22) protruding, along the circumferential direction (C1), from the pressure side surface (1p) of the airfoil body (1),
wherein an upper first transition portion (23A) forms a concave curved connection between the suction side surface (1s) and an upper surface (21a) of the first snubber element (21), the upper surface (21a) of the first snubber element (21), with regard to the radial direction (R1) facing towards a tip end (12) of the airfoil body (1),
wherein a lower first transition portion (23B) forms a concave curved connection between the suction side surface (1s) and a lower surface (21b) of the first snubber element (21), the lower surface (21b) of the first snubber element (21), with regard to the radial direction (R1) facing towards a root end (11) of the airfoil body (1),
wherein an upper second transition portion (24A) forms a concave curved connection between the pressure side surface (1p) and an upper surface (22a) of the second snubber element (22), the upper surface (22a) of the second snubber element (22), with regard to the radial direction (R1), facing towards the tip end (12) of the airfoil body (1),
wherein a lower second transition portion (24B) forms a concave curved connection between the pressure side surface (1p) and a lower surface (22b) of the second snubber element (22), the lower surface (22b) of the second snubber element (22), with regard to the radial direction (R1), facing towards the root end (11) of the airfoil body (1),
**characterized in that**
each first transition portion (23A, 23B) defines a first radius (r23), each second transition portion (24A, 24B) defines a second radius (r24), and
the first radius (r23) is smaller than the second radius (r24).

2. The blade (100) according to claim 1, wherein the first snubber element (21) protrudes from the suction side surface (1s) by a first length (121), wherein the second snubber element protrudes from the pressure side surface (1p) by a second length (l22), and wherein the first length (121) is smaller than the second length (l22).

3. The blade (100) according to claim 2, wherein the first snubber element (21) includes a first contact surface (21c) that faces away from the suction side surface (1s) and that extends along an axial direction (A1), the axial direction (A1) running transverse to the radial direction (R1) and the circumferential direction (C1), wherein the second snubber element (22) includes a second contact surface (22c) that faces away from the pressure side surface (1p) and that extends along the axial direction (A1), and wherein the first length (l21) and the second length (l22) are measured along a connection line (X2) that connects a center position (x21) of the first contact surface (21c) with regard to the axial direction (A1) and a center position (x22) of the second contact surface (22c) with regard to the axial direction (A1).

4. The blade (100) according to claim 3, wherein the first contact surface (21c) and the second contact surface (22c) each extend, at least partially, inclined relative to the axial direction (A1).

5. The blade (100) according to any one of claims 2 to 4, wherein a ratio of the first length (l21) to the second length (l22) is within a range between 0.7 and 0.9.

6. The blade (100) according to any one of the preceding claims, wherein a ratio of the first radius (r23) to the second radius (r24) is within a range between 0.2 and 0.8.

7. The blade (100) according to any one of the preceding claims, wherein the snubber structure (2) and the airfoil body (1) are integrally formed.

8. A blade assembly (200), comprising:
a plurality of blades (100) according to any one of the preceding claims; and
a rotor disk (210) to which said plurality of the turbine blades (100) is coupled;
wherein the first snubber element (21) of each blade (100) includes a first contact surface (21c) facing away from the suction side surface (1s);
wherein the second snubber element (22) of each blade (100) includes a second contact surface (22c) that faces away from the pressure side surface (1p); and
wherein each first contact surface (21c) faces one second contact surface (22c).

9. A turbine (300) comprising the turbine blade assembly (200) according to claim 8.

10. The turbine (300) according to claim 9, wherein the blade assembly (200) forms part of a turbine section (320) of the turbine (300).

## Patentansprüche

1. Schaufel (100) für eine Turbomaschine, insbesondere für eine Turbine (300), aufweisend:
einen Profilkörper (1), der sich in einer radialen Richtung (R1) erstreckt und eine Saugseitenoberfläche (1s) und eine der Saugseitenoberfläche (1s) in Bezug auf eine Umfangsrichtung (C1) gegenüberliegende Druckseitenoberfläche (1p) aufweist, wobei die Umfangsrichtung (C1) sich quer zu der radialen Richtung (R1) erstreckt; und
eine Dämpferstruktur (2), die ein erstes Dämpferelement (21), das entlang der Umfangsrichtung (C1) von der Saugseitenoberfläche (1s) des Profilkörpers (1) vorsteht, und ein zweites Dämpferelement (22) aufweist, das entlang der Umfangsrichtung (C1) von der Druckseitenoberfläche (1p) des Profilkörpers (1) vorsteht,
wobei ein oberer erster Übergangsabschnitt (23A) eine konkav gekrümmte Verbindung zwischen der Saugseitenoberfläche (1s) und einer oberen Oberfläche (21a) des ersten Dämpferelements (21) bildet, wobei die obere Oberfläche (21a) des ersten Dämpferelements (21) in Bezug auf die radiale Richtung (R1) einem Spitzenende (12) des Profilkörpers (1) zugewandt ist,
wobei ein unterer erster Übergangsabschnitt (23B) eine konkav gekrümmte Verbindung zwischen der Saugseitenoberfläche (1s) und einer unteren Oberfläche (21b) des ersten Dämpferelements (21) bildet, wobei die untere Oberfläche (21b) des ersten Dämpferelements (21) in Bezug auf die radiale Richtung (R1) einem Fußende (11) des Profilkörpers (1) zugewandt ist,
wobei ein oberer zweiter Übergangsabschnitt (24A) eine konkav gekrümmte Verbindung zwischen der Druckseitenoberfläche (1p) und einer oberen Oberfläche (22a) des zweiten Dämpferelements (22) bildet, wobei die obere Oberfläche (22a) des zweiten Dämpferelements (22) in Bezug auf die radiale Richtung (R1) dem Spitzenende (12) des Profilkörpers (1) zugewandt ist,
wobei ein unterer zweiter Übergangsabschnitt (24B) eine konkav gekrümmte Verbindung zwischen der Druckseitenoberfläche (1p) und einer unteren Oberfläche (22b) des zweiten Dämpferelements (22) bildet, wobei die untere Oberfläche (22b) des zweiten Dämpferelements (22) in Bezug auf die radiale Richtung (R1) dem Fußende (11) des Profilkörpers (1) zugewandt ist,
**dadurch gekennzeichnet, dass**
jeder erste Übergangsabschnitt (23A, 23B) einen ersten Radius (r23) definiert,
jeder zweite Übergangsabschnitt (24A, 24B) einen zweiten Radius (r24) definiert, und
der erste Radius (r23) kleiner als der zweite Radius (r24) ist.

2. Schaufel (100) nach Anspruch 1, wobei das erste Dämpferelement (21) um eine erste Länge (l21) von der Saugseitenoberfläche (1s) vorsteht, wobei das zweite Dämpferelement um eine zweite Länge (l22) von der Druckseitenoberfläche (1p) vorsteht, und wobei die erste Länge (l21) kleiner als die zweite Länge (l22) ist.

3. Schaufel (100) nach Anspruch 2, wobei das erste Dämpferelement (21) eine erste Kontaktfläche (21c) aufweist, die von der Saugseitenoberfläche (1s) abgewandt ist und die sich entlang einer axialen Richtung (A1) erstreckt, wobei die axiale Richtung (A1) quer zu der radialen Richtung (R1) und der Umfangsrichtung (C1) verläuft, wobei das zweite Dämpferelement (22) eine zweite Kontaktfläche (22c) aufweist, die von der Druckseitenoberfläche (1p) abgewandt ist und die sich entlang der axialen Richtung (A1) erstreckt, und wobei die erste Länge (l21) und die zweite Länge (l22) entlang einer Verbindungslinie (X2) gemessen werden, die eine Mittelposition (x21) der ersten Kontaktfläche (21c) in Bezug auf die axiale Richtung (A1) und eine Mittelposition (x22) der zweiten Kontaktfläche (22c) in Bezug auf die axiale Richtung (A1) verbindet.

4. Schaufel (100) nach Anspruch 3, wobei sich die erste Kontaktfläche (21c) und die zweite Kontaktfläche (22c) jeweils zumindest teilweise geneigt relativ zu der axialen Richtung (A1) erstrecken.

5. Schaufel (100) nach einem der Ansprüche 2 bis 4, wobei ein Verhältnis der ersten Länge (121) zu der zweiten Länge (l22) in einem Bereich zwischen 0,7 und 0,9 liegt.

6. Schaufel (100) nach einem der voranstehenden Ansprüche, wobei ein Verhältnis des ersten Radius (r23) zu dem zweiten Radius (r24) in einem Bereich zwischen 0,2 und 0,8 liegt.

7. Schaufel (100) nach einem der voranstehenden Ansprüche, wobei die Dämpferstruktur (2) und der Profilkörper (1) einstückig ausgebildet sind.

8. Schaufelanordnung (200), aufweisend:
eine Vielzahl von Schaufeln (100) nach einem der voranstehenden Ansprüche; und
eine Rotorscheibe (210), mit der die Vielzahl der Turbinenschaufeln (100) gekoppelt ist;
wobei das erste Dämpferelement (21) jeder Schaufel (100) eine erste Kontaktfläche (21c) aufweist, die von der Saugseitenoberfläche (1s) abgewandt ist;
wobei das zweite Dämpferelement (22) jeder Schaufel (100) eine zweite Kontaktfläche (22c) aufweist, die von der Druckseitenoberfläche (1p) abgewandt ist; und
wobei jede erste Kontaktfläche (21c) einer zweiten Kontaktfläche (22c) zugewandt ist.

9. Turbine (300) mit der Turbinenschaufelanordnung (200) nach Anspruch 8.

10. Turbine (300) nach Anspruch 9, wobei die Schaufelanordnung (200) einen Teil eines Turbinenabschnitts (320) der Turbine (300) bildet.

## Revendications

1. Aube (100) pour une turbomachine, en particulier pour une turbine (300), comprenant :
un corps de profil aérodynamique (1) s'étendant dans une direction radiale (R1) et comprenant une surface d'extrados (1s) et une surface d'intrados (1p) opposée à la surface d'extrados (1s) par rapport à une direction circonférentielle (C1) s'étendant transversalement à la direction radiale (R1) ; et
une structure d'amortissement (2) comprenant un premier élément d'amortissement (21) faisant saillie, dans la direction circonférentielle (C1), depuis la surface d'extrados (1s) du corps de profil aérodynamique (1), et un deuxième élément d'amortissement (22) faisant saillie, dans la direction circonférentielle (C1), depuis la surface d'intrados (1p) du corps de profil aérodynamique (1),
où une première partie de transition supérieure (23A) forme une connexion incurvée concave entre la surface d'extrados (1s) et une surface supérieure (21a) du premier élément d'amortissement (21), la surface supérieure (21a) du premier élément d'amortissement (21), par rapport à la direction radiale (R1) faisant face à une extrémité de pointe (12) du corps de profil aérodynamique (1),
où une première partie de transition inférieure (23B) forme une connexion incurvée concave entre la surface d'extrados (1s) et une surface inférieure (21b) du premier élément d'amortissement (21), la surface inférieure (21b) du premier élément d'amortissement (21), par rapport à la direction radiale (R1) faisant face à une extrémité d'emplanture (11) du corps de profil aérodynamique (1),
où une deuxième partie de transition supérieure (24A) forme une connexion incurvée concave entre la surface d'intrados (1p) et une surface supérieure (22a) du deuxième élément d'amortissement (22), la surface supérieure (22a) du deuxième élément d'amortissement (22) par rapport à la direction radiale (R1) faisant face à l'extrémité de pointe (12) du corps de profil aérodynamique (1),
où une deuxième partie de transition inférieure (24B) forme une connexion incurvée concave entre la surface d'intrados (1p) et une surface inférieure (22b) du deuxième élément d'amortissement (22), la surface inférieure (22b) du deuxième élément d'amortissement (22) par rapport à la direction radiale (R1) faisant face à l'extrémité d'emplanture (11) du corps de profil aérodynamique (1),
**caractérisée en ce que**
chaque première partie de transition (23A, 23B) définit un premier rayon (r23), chaque deuxième partie de transition (24A, 24B) définit un deuxième rayon (r24), et
le premier rayon (r23) est inférieur au deuxième rayon (r24).

2. Aube (100) selon la revendication 1, où le premier élément d'amortissement (21) fait saillie de la surface d'extrados (1s) sur une première longueur (121), le deuxième élément d'amortissement faisant saillie de la surface d'intrados (1p) sur une deuxième longueur (122), et la première longueur (121) étant inférieure à la deuxième longueur (122).

3. Aube (100) selon la revendication 2, où le premier élément d'amortissement (21) comprend une première surface de contact (21c) opposée à la surface d'extrados (1s) et s'étendant dans une direction axiale (A1), ladite direction axiale (A1) étant transversale à la direction radiale (R1) et à la direction circonférentielle (C1), où le deuxième élément d'amortissement (22) comprend une deuxième surface de contact (22c) opposée à la surface d'intrados (1p) et s'étendant dans la direction axiale (A1), et où la première longueur (121) et la deuxième longueur (122) sont mesurées le long d'une ligne de connexion (X2) reliant un emplacement central (x21) de la première surface de contact (21c) par rapport à la direction axiale (A1) à un emplacement central (x22) de la deuxième surface de contact (22c) par rapport à la direction axiale (A1).

4. Aube (100) selon la revendication 3, où la première surface de contact (21c) et la deuxième surface de contact (22c) s'étendent chacune au moins partiellement inclinées par rapport à la direction axiale (A1).

5. Aube (100) selon l'une des revendications 2 à 4, où le rapport entre la première longueur (121) et la deuxième longueur (122) est compris entre 0,7 et 0,9.

6. Aube (100) selon l'une des revendications précédentes, où le rapport entre le premier rayon (r23) et le deuxième rayon (r24) est compris entre 0,2 et 0,8.

7. Aube (100) selon l'une des revendications précédentes, où la structure d'amortissement (2) et le corps de profil aérodynamique (1) sont formés d'un seul tenant.

8. Ensemble d'aubes (200), comprenant :
une pluralité d'aubes (100) selon l'une des revendications précédentes ; et
un disque de rotor (210) auquel ladite pluralité d'aubes de turbine (100) sont raccordées ;
où le premier élément d'amortissement (21) de chaque aube (100) comprend une première surface de contact (21c) opposée à la surface d'extrados (1s) ;
où le deuxième élément d'amortissement (22) de chaque aube (100) comprend une deuxième surface de contact (22c) opposée à la surface d'intrados (1p) ; et
où chaque première surface de contact (21c) fait face à une deuxième surface de contact (22c).

9. Turbine (300), comprenant l'ensemble d'aubes de turbine (200) selon la revendication 8.

10. Turbine (300) selon la revendication 9, où l'ensemble d'aubes (200) forme une partie d'une section de turbine (320) de la turbine (300).
